Europäisches Patentamt

European Patent Office

Office européen des brevets

(11) Veröffentlichungsnummer: **0 104 402**
**A2**

# (12) EUROPÄISCHE PATENTANMELDUNG

(21) Anmeldenummer: **83108105.4**

(22) Anmeldetag: **17.08.83**

(51) Int. Cl.³: **G 01 S 13/78**

(30) Priorität: **01.09.82 DE 3232436**

(43) Veröffentlichungstag der Anmeldung:
**04.04.84 Patentblatt 84/14**

(84) Benannte Vertragsstaaten:
**CH FR GB IT LI SE**

(71) Anmelder: **BROWN, BOVERI & CIE Aktiengesellschaft**
**Kallstadter Strasse 1**
**D-6800 Mannheim 31(DE)**

(72) Erfinder: **Berthold, Rainer, Dipl.-Phys**
**Wielandstrasse 4**
**D-6901 Gaiberg(DE)**

(72) Erfinder: **Horn, Roger**
**Beethovenstrasse 7**
**D-6249 Fürth(DE)**

(72) Erfinder: **Kalinski, Josef Robert, Dipl.-Ing.**
**Bunsenstrasse 3**
**D-6904 Eppelheim(DE)**

(74) Vertreter: **Kempe, Wolfgang, Dr. et al,**
**c/o Brown, Boveri & Cie AG Postfach 351**
**D-6800 Mannheim 1(DE)**

(54) **Verfahren und Vorrichtung zum optimalen Betreiben von Sende- und Empfangsantennen.**

(57) Zum optimalen Betreiben von Sende- und Empfangsantennen, insbesondere Mikrowellenstreifenleitungsantennen, im Antwortgerät einer aus einem Abfragegerät und wenigstens einem Antwortgerät bestehenden Einrichtung zum automatischen Identifizieren von Objekten und/oder Lebewesen ohne nachträglichen Geometrieabgleich und ohne Einhaltung besonders hoher Fertigungsgenauigkeit wird vorgeschlagen, die Frequenz der Mikrowellenstrahlung solange zu verändern, bis eine einwandfreie Funkverbindung registriert wird.

Berücksichtigter Stand der Technik:
DE-OS 25 08 201,
DE-OS 25 24 571,
DE-OS 30 09 179,
DE-OS 29 19 753,
DE-OS 29 46 942,
"NTG-Fachberichte", Band 78: "Antennen '82",
Seiten 46 bis 51.

FIG. 2

- 7 -

BROWN, BOVERI & CIE   AKTIENGESELLSCHAFT
Mannheim                                      27. Aug. 1982
Mp.-Nr. 620/82                              ZPT/P3-Bi/Bt

Verfahren und Vorrichtung zum optimalen Betreiben von
Sende- und Empfangsantennen

Die Erfindung betrifft ein Verfahren zum optimalen
Betreiben von Sende- und Empfangsantennen, insbesondere
einer Mikrowellenstreifenleitungsantenne, gemäß dem
Oberbegriff des Patentanspruchs 1. Die Erfindung betrifft ferner eine Vorrichtung zur Durchführung des
Verfahrens.

Die Erfindung ist besonders geeignet für den Einsatz in
den in den DE-OSen 25 08 201, 30 09 179, 29 19 753 oder
29 46 942 beschriebenen Vorrichtungen und Verfahren.

Es handelt sich dabei um Anlagen, die aus einem ortsfesten Abfragegerät und einem beweglichen Antwortgerät
bestehen. Das Abfragegerät besitzt einen Energiesender
und einen Öffnungscode-Sender, der den in einem Öffnungscode-Speicher und gegebenenfalls einem Öffnungscode-Zusatzspeicher gespeicherten Öffnungscode aussendet, sowie einen Kennzeichenempfänger und eine Datenverarbeitungseinheit. Das Antwortgerät enthält einen

620/82 2 0104402

Energieempfänger, der die eingestrahlte Energie in Gleichstrom für die Elektronik des Antwortgerätes umwandelt. Ferner enthält das Antwortgerät einen Öffnungscode-Empfänger mit nachgeordnetem Öffnungscode-Vergleicher, der den in einem Öffnungscode-Speicher und gegebenenfalls Öffnungscode-Zusatzspeicher gespeicherten Code mit dem über den Funkweg empfangenen Code vergleicht. Das Ausgangssignal des Öffnungscode-Vergleichers steuert über einen Öffnungscode-Verarbeiter einen Kennzeichen-Sender. Das vom Kennzeichen-Sender über einen weiteren Funkweg zum Abfragegerät auszusendende Kennzeichen ist in einem Kennzeichen-Speicher und gegebenenfalls in einem oder mehreren Kennzeichen-Zusatzspeichern gespeichert. Mit Hilfe eines zusätzlichen Kennzeichen-Codierempfängers im Antwortgerät kann der im Kennzeichen-Zusatzspeicher gespeicherte Kennzeichenteil beliebig über Funk geändert werden. Da die empfangene Energie naturgemäß klein ist, der Kennzeichen-Sender jedoch ein möglichst energiereiches Antwortsignal abstrahlen soll, um eine hohe Reichweite zu erzielen, kann der vom Kennzeichen-Sender auszustrahlende Signalträger im ortsfesten Abfragegerät erzeugt und mit dem Energiestrahl und dem Öffnungscode an das bewegliche Antwortgerät übertragen werden, wo der Antwortsignalträger vor seiner Wiederabstrahlung durch den Kennzeichen-Sender lediglich moduliert wird.

Mit Hilfe des in der DE-OS 29 46 942 beschriebenen Verfahrens ist das Erkennen und/oder Zählen von Objekten von einer zentralen Abfragestelle aus möglich, und zwar auch dann, wenn mehrere Antwortgeräte gleichzeitig aktiviert werden und auf der selben Frequenz zurücksenden.

Aus der Publikation "NTG-Fachberichte", Band 78: "Antennen'82", Seiten 46 bis 51 sind Aufbau und Eigenschaften verschiedener Mikrowellenantennenformen bekannt. Daraus geht hervor, daß beispielsweise für Streifenleitungsantennen die Kosten gering sind, daß die Bandbreite sehr schmal ist und daß die Anforderungen an die Genauigkeit der Herstellung sehr hoch sind. Dielektrische Antennen besitzen demgegenüber eine große Bandbreite, geringe Toleranzforderungen bezüglich der Herstellgenauigkeit und einen mittleren Preis. Hohlleiterantennen besitzen wieder eine geringe Bandbreite, hohe Toleranzforderungen und einen hohen Preis.

Der in der obengenannten Publikation angestellte Vergleich der planaren Antennenformen hinsichtlich der Herstellung zeigt, daß die Herstellung von Streifenleitungsantennen im Prinzip besonders einfach ist. Es hat sich jedoch gezeigt, daß bei einer Serienfertigung derartiger Streifenleitungsantennen die Maxima sowie die Bandbreiten der Resonanzkurven relativ stark streuen. Aus diesem Grunde muß ein Geometrieabgleich, beispielsweise mittels Laser, vorgenommen werden. Diese Einzelbehandlung jedes Antennenexemplars bedeutet verständlicherweise einen erhöhten Aufwand in der Produktion.

Der vorliegenden Erfindung liegt demgemäß die Aufgabe zugrunde, ein Verfahren zum Optimieren der Sende- und Empfangseigenschaften von Hoch- bzw. Höchstfrequenzantennen anzugeben, die bei einer der eingangs erwähnten Einrichtungen zur automatischen Identifizierung von Objekten und/oder Lebewesen verwendet werden sollen, welches ohne einen nachträglichen Geometrieabgleich auskommt und auch keine besonders hohe Anforderung an die Fertigung der Antennenstrukturen stellt.

Diese Aufgabe wird gelöst durch die kennzeichnenden Merkmale des Patentanspruchs 1.

Damit ergeben sich die Vorteile, daß nicht nur der Fertigungsaufwand erheblich reduziert werden kann, sondern daß auch die Einflüsse von Temperatur und Alterung, die man bisher nur durch besonders sorgfältige Materialauswahl zu beherrschen versuchen konnte, für die einwandfreie Funktion völlig bedeutungslos werden und daß eine Identifizierung einer einzigen Antwortstation aus einer Vielzahl von gleichzeitig angesprochenen nicht nur mit Hilfe des in der DE-OS 29 46 942 beschriebenen Verfahrens möglich ist, sondern auch - jedenfalls bis zu einem gewissen Grad - durch die zwar zufällig eingestellte, jedoch individuelle Sende- und Empfangsfrequenz.

Weiterbildungen der Erfindung sowie deren Vorteile, insbesondere eine zur Durchführung des Verfahrens geeignete Vorrichtung, ergeben sich aus den Unteransprüchen in Verbindung mit der nachfolgenden Beschreibung eines Ausführungsbeispiels anhand der Zeichnung.

Es zeigen:

Fig. 1     ein Blockschaltbild einer Datenverarbeitungsund Sendersteuereinrichtung und

Fig. 2     ein Blockschaltbild einer Sende- und Empfangseinrichtung im Abfragegerät einer Einrichtung zur automatischen Identifizierung von Objekten und/oder Lebewesen.

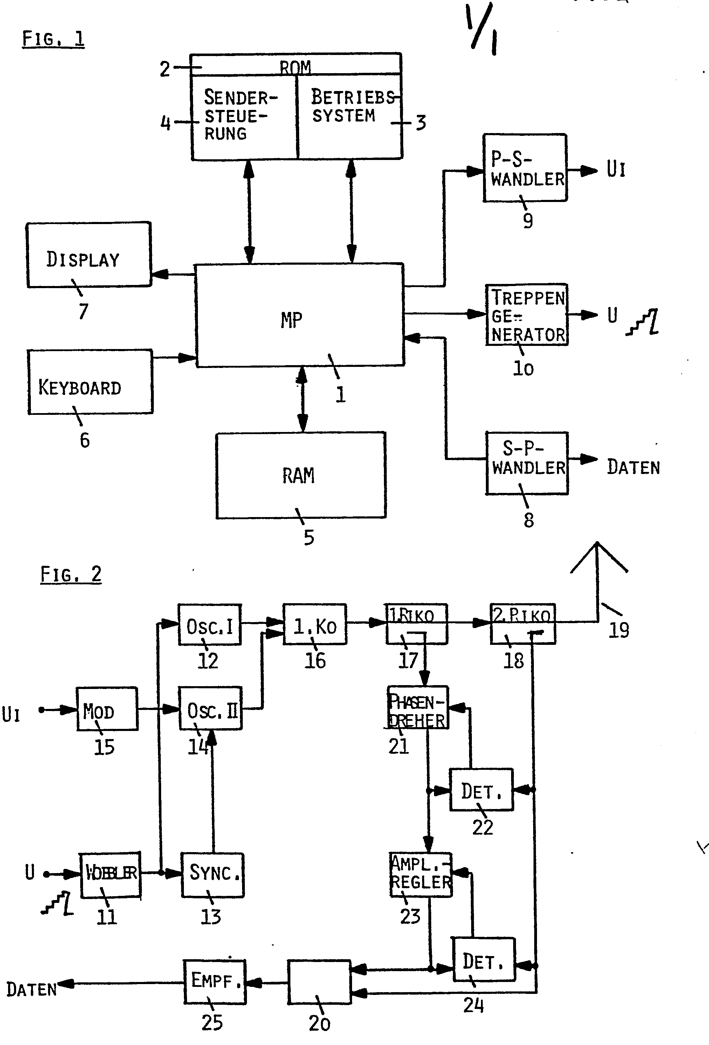

In Fig. 1 erkennt man einen Mikrocomputer, bestehend aus einem Mikroprozessor 1, einem ROM 2, in dem das Betriebssystem 3 sowie die Sendersteuerung 4 gespeichert sind, einem RAM 5, einer Tastatur 6 und einer optischen und/oder akustischen Anzeigeeinheit 7. Der Mikroprozessor 1 verarbeitet Daten, die von der Sende- und Empfangseinrichtung gemäß Fig. 2 geliefert und über einen Serien-Parallel-Wandler 8 in mikroprozessorgerechte Form gewandelt werden.

Die einlaufenden Daten werden im Mikroprozessor 1 in Informationen gewandelt und z.B. auf der Anzeigeeinheit 7 dargestellt. Auszusendende Informationen gibt der Mikroprozessoer 1 an einen Parallel-Serien-Wandler 9, wo sie in eine serielle Informationsspannung $U_i$ umgewandelt werden. Außerdem steuert der Mikroprozessor 1 einen Treppenspannungsgenerator 10, der am Ausgang eine treppenförmige Spannung U abgibt. Statt eines Treppenspannungsgenerators kann auch ein Rampenspannungsgenerator verwendet werden.

Die Ausgangsspannung des Treppenspannungsgenerators 10 wird solange erhöht, bis der Mikroprozessor 1 den Befehl abgibt, die Ausgangsspannung U auf dem gerade eingestellten Wert zu halten. Dies ist dann der Fall, wenn ein vom Antwortgerät kommendes Kennzeichen einwandfrei empfangen und vom Mikroprozessor 1 erkannt wird. Zur weiteren Optimierung kann als Spannungshaltekriterium auch auf maximale Empfangsenergie im Empfänger der Abfragestation abgestimmt werden. Es ist auch möglich, als Spannungshaltekriterium ein Signal auszuwerten, welches im Antwortgerät erzeugt und an das Abfragegerät zurückgesendet wird und welches Auskunft darüber gibt, daß im Energieempfänger des Antwortgerätes maximaler Energieempfang erreicht ist.

Fig. 2 zeigt die eigentliche Sende- und Empfangseinrichtung. Die Treppenspannung U gelangt an eine Wobbeleinrichtung 11, mit der die Frequenz eines ersten Oszillators 12, der für die Frequenz der Energiestrahlung zuständig ist, gesteuert wird. Die Wobbeleinrichtung 11 steuert ferner über eine Synchronisiereinrichtung 13 einen zweiten Oszillator 14, der die Frequenz des Informationssignals erzeugt, die mit Hilfe eines Modulators 15 mit der vom Mikroprozessor 1 bzw. Parallel-Serien-Wandler 9 kommenden Informationsspannung $U_i$ moduliert wird. Die Ausgänge der beiden Oszillatoren 12, 14 sind über ein Koppelglied 16 an einen ersten Richtkoppler 17 gekoppelt, in dem ein Teil der Sendeenergie ausgekoppelt wird, als Hilfssignal für die Demodulation des Empfangssignals. Die Sendeenergie gelangt dann über einen weiteren Richtkoppler 18 an eine Sende- und Empfangsantenne 19.

Das von der Sende- und Empfangssantenne 19 aufgenommene, vom Antwortgerät stammende Signal wird über den antennenseitigen Richtkoppler 18 ausgekoppelt und in einem dritten Richtkoppler 20 mit dem im ersten Richtkoppler 17 ausgekoppelten Sendesignal verglichen. Zuvor wird die vom ersten Richtkoppler 17 ausgekoppelte Probe des Sendesignals in einem Phasenschieber 21 mit Phasendetektor 22 und einem Amplitudenregler 23 mit Amplitudendetektor 24 an das Empfangssignal angepaßt. Ein derartiges System wird üblicherweise als Homodyn-System bezeichnet; ein derartiges Homodyn-Übertragungssystem zur Funkortung ist aus der DE-AS 25 24 571 bekannt. Eine Besonderheit des vorliegenden Systems besteht jedoch darin, daß sowohl das Sende- als auch das Empfangssignal zwei Frequenzen enthalten. Das Sendesignal enthält die Energiefrequenz des Oszillators 12 und die Signalfrequenz des Oszillators 14; das Empfangssignal enthält zusätzlich die Frequenz des Antwortsignals aus dem Antwortgerät.

Das im dritten Richtkoppler 20 gewonnene, das Kennzeichen des Antwortgerätes enthaltende, Antwortsignal gelangt an einen Kennzeichenempfänger 25 und von hier als Datensignal über den Serien-Parallel-Wandler 8 zum Mikroprozessor 1.

## A n s p r ü c h e

1. Verfahren zum optimalen Betreiben von Sende- und Empfangsantennen, insbesondere einer Mikrowellenstreifenleitungsantenne, die als Empfangsantenne im Antwortgerät einer Einrichtung zur automatischen Identifizierung von Objekten und/oder Lebewesen dient, welche Einrichtung aus einem ortsfesten Abfragegerät mit einem Energiesender zur Versorgung des Antwortgerätes mit elektrischer Energie, einem Informationssender, einem Kennzeichenempfänger und einer Datenverarbeitungseinheit und dem beweglichen Antwortgerät mit einem Energieempfänger zur Umwandlung der eingestrahlten Energie in eine Versorgungsspannung, einem Informationsempfänger und einem Kennzeichensender besteht, dadurch gekennzeichnet, daß die Frequenz der vom Energie- (12) und Informationssender (14) ausgestrahlten Mikrowellenstrahlung solange verändert wird, bis der Kennzeichenempfänger (25) ein vom Antwortgerät kommendes Kennzeichen einwandfrei empfängt.

2. Verfahren nach Anspruch 1, dadurch gekennzeichnet, daß die Frequenz solange verändert wird, bis der Kennzeichenempfänger (25) maximale Empfangsenergie anzeigt.

3. Vorrichtung zur Durchführung des Verfahrens nach Anspruch 1 oder 2, dadurch gekennzeichnet, daß die Datenverarbeitungseinheit (1) einen Treppen- bzw. Rampenspannungsgenerator (10) ansteuert, dem eine Wobbeleinrichtung (11) zum Verändern der Frequenz von Energie- (12) und Informationsoszillator (14) nachgeschaltet ist.

FIG. 1

FIG. 2